# EUROPEAN PATENT SPECIFICATION

(11) **EP 2 909 044 B1**
(45) Date of publication and mention of the grant of the patent: **13.12.2017**
(21) Application number: 13821950.6
(22) Date of filing: 21.10.2013
(51) Int. Cl.: B60B 5/02, B60B 1/14, B29C 70/46, B29C 70/02, B29C 45/02, B29L 31/32, B29C 70/48

(54) **MOTOR VEHICLE RIM MADE OF A COMPOSITE MATERIAL AND RELATIVE MANUFACTURING METHOD**
KRAFTFAHRZEUGFELGE AUS EINEM VERBUNDSTOFFMATERIAL UND ZUGEHÖRIGES HERSTELLUNGSVERFAHREN
JANTE DE VÉHICULE À MOTEUR CONSTITUÉE D'UN MATÉRIAU COMPOSITE ET PROCÉDÉ DE FABRICATION ASSOCIÉ

(30) Priority: 19.10.2012 IT BO20120569; 19.10.2012 IT BO20120570
(43) Date of publication of application: 26.08.2015
(73) Proprietor: RI-BA Composites - S.r.l. Con Unico Socio, Faenza (IT)
(72) Inventor: BEDESCHI, Andrea, I-48018 Faenza (IT)
(74) Representative: Modiano, Micaela Nadia
(86) International application number: PCT/IB2013/059516
(87) International publication number: WO 2014/061002

(56) References cited:
- EP-A1- 0 842 757
- EP-A1- 1 997 647
- EP-A1- 2 363 272
- DE-A1- 10 006 400
- DE-A1- 10 145 630
- DE-A1- 19 729 824

## Description

### TECHNICAL FIELD

The present invention relates to a rim for motor vehicles made of a composite material, in particular for road motor vehicles, and to a manufacturing method of said rim for motor vehicles made of a composite material.

### PRIOR ART

As known, a rim for motor vehicles comprises an outer channel on which a tire is mounted, and a central assembly comprising in turn a central hub for the connection to a hub of the axle shaft of the motor vehicle and a number of peripheral spokes for connecting the hub to the channel.

Even in the automotive industry, as well as in many other areas, the need to reduce the weight of the different components in order to reduce fuel consumption and improve at the same time, the performance of a motor vehicle is becoming ever more urgent.

For this reason, since several years the use of different components made of a composite material for the automotive industry is becoming more widespread. In particular both aesthetic parts (such as the interior of the motor vehicle, or the body parts) made of a composite material, and structural parts (such as, for example, portions of the chassis) made of a composite material are increasingly utilized.

As regards to the production of rims made of a composite material, rims for motor vehicles mostly for applications in the racing industry have been proposed but this type of rim is normally not used in road motor vehicles due to problems related to safety of the motor vehicle and related to production costs.

The rims for motor vehicles made of a composite material of known type and for racing applications are made for the most part by the direct intervention of an operator with a consequent considerable increase in terms of costs and production times as compared with a rim for motor vehicles of the traditional type manufactured, for example, in steel or aluminum.

The closest prior art document DE10006400 describes instead a manufacturing method for a rim for road motor vehicles that provides for manufacturing the central assembly at least partially by means of a press moulding process, known as SMC (*Sheet Moulding Compounds*), using a carbon fiber material with short fibers and a resin, preferably of the thermosetting type, manufacturing the outer channel, and assembling the outer channel and the central assembly so as to obtain the rim.

### DESCRIPTION OF THE INVENTION

Purpose of the present invention is to provide a method for manufacturing a rim for motor vehicles made of a composite material, in particular for road motor vehicles, which is devoid of the drawbacks of the state of the art and is both easy and economical to implement.

Further object of the present invention is to provide a rim for motor vehicles made of a composite material, in particular for road motor vehicles, which is devoid of the drawbacks of the state of the art and is both easy and economical to produce.

According to the present invention a method of manufacturing a rim for motor vehicles made of a composite material is also provided, in particular for road motor vehicles, as claimed by claim 1 and any one of the subsequent claims dependent on claim 1.

According to the present invention, a rim for motor vehicles made of a composite material is provided, in particular for road motor vehicles, as claimed in claim 4 and any one of the subsequent claims dependent on claim 4.

### BRIEF DESCRIPTION OF THE DRAWINGS

The present invention will now be described with reference to the accompanying drawings which illustrate a non-limiting embodiment, wherein:
- Figure 1 is a front view of a rim for motor vehicles made of a composite material manufactured according to the present invention; and
- Figure 2 is a front view of a first embodiment of a detail of the rim of figure 1;
- Figure 3 is a side view of a second embodiment of the detail of Figure 2;
- Figure 4 is a front view of a second detail of the rim in Figure 1;
- Figure 5 is a perspective view and in side elevation of a step in the manufacturing process of Figure 4; and
- Figure 6 is a perspective view and in side elevation of a portion of the detail of Figure 4.

### PREFERRED EMBODIMENTS OF THE INVENTION

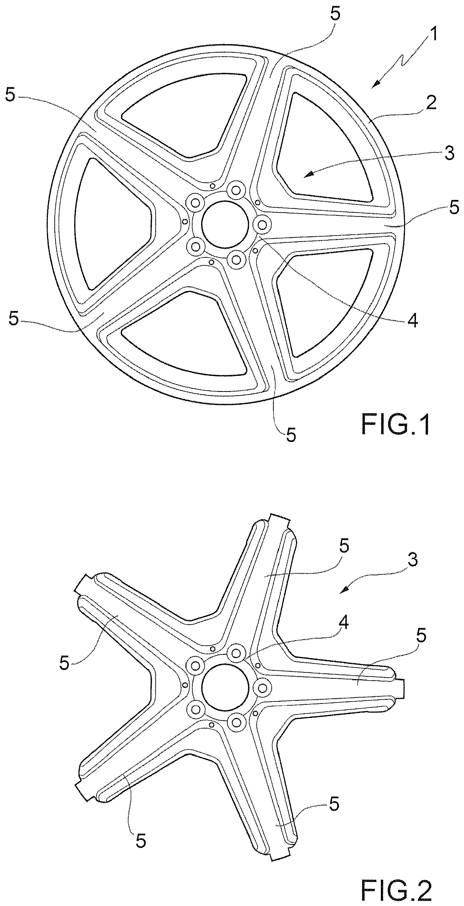

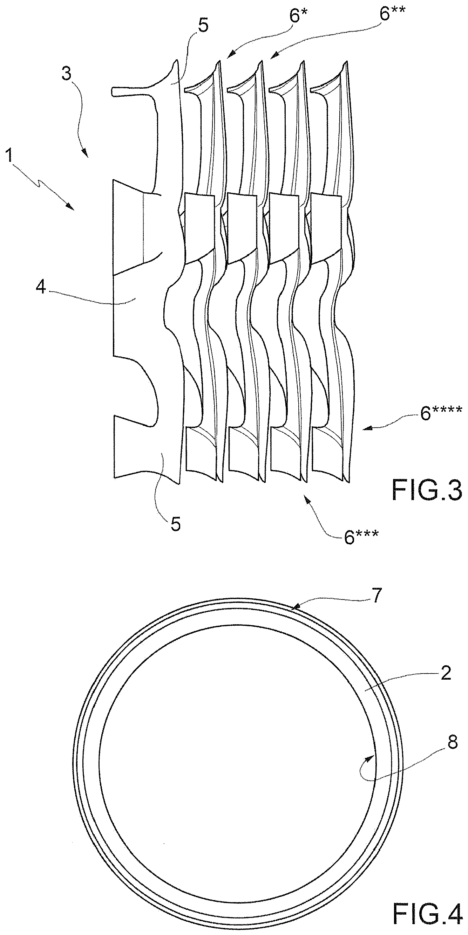

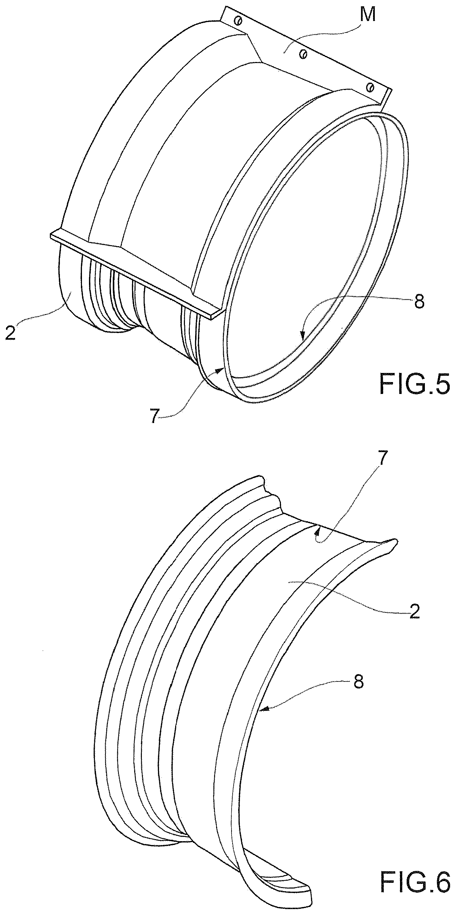

In Figures 1 and 3, with the number 1 is indicated as a whole a rim for motor vehicles comprising an outer channel 2 (shown in detail in Figures 4 to 6) which is suited to define a seat on which a tire (not shown) is mounted and a central assembly 3 (shown in Figure 2) comprising in turn a central hub 4 for the connection to a hub (not shown) of an axle shaft of the motor vehicle and a number of peripheral spokes 5 for the connection of the hub 4 to the channel 2.

According to a preferred variant, the central assembly 3 comprises in turn the central hub 4 for the connection to the motor vehicle chassis and the number of peripheral spokes 5 for the connection of the hub 4 to the channel 2 is made of a composite material with short carbon fibers, preferably carbon fibers with a length up to 25-50 mm.

In particular, according to a preferred variant, the central assembly 3 in turn comprising a central hub 4 for the connection to the motor vehicle frame and the number of peripheral spokes 5 for the connection of the hub 4 to the channel 2 is made entirely in a composite material with short fibers, preferably carbon fibers with a length up to 25-50 mm.

According to a further variant, the central hub 4 for the connection to the motor vehicle chassis is made of a composite material with short fibers, preferably carbon fibers having a length up to 25-50 mm. Said number of peripheral spokes 5 for the connection of the hub 4 to the channel 2 instead, is made in any material (for example a metallic material chosen from steel or aluminum or a composite material).

According to a further variant, the central hub 4 for the connection to the motor vehicle chassis and, partially, also said number of peripheral spokes 5 for the connection of the hub 4 to the channel 2 are made of a composite material with short fibers, preferably carbon fibers with a length up to 25-50 mm. The remaining portion of said number of peripheral spokes 5 for the connection of the hub 4 to the channel 2 instead, is made in any metallic material chosen from steel or aluminum.

According to a preferred variant, said central assembly 3 is not provided with any insert made of metallic material and arranged in correspondence to the hub 4 to improve the coupling of the hub 4 to the hub of an axle shaft of the motor vehicle.

According to a further variant, said central assembly 3 comprises instead an insert (not shown) made of metallic material and which is assembled in correspondence to the hub 4 to facilitate the coupling of the hub 4 to the hub of the axle shaft of the motor vehicle.

According to a variant, a portion of said central assembly 3 (i.e. the hub 4 and/or part of said number of peripheral spokes 5) comprises a number of skins 6 (indicated respectively with 6*, 6**, 6*** and 6**** in Figure 3) made of a composite material with a long fibers that are placed on top of the central assembly 3 (or portion of the same central assembly 3) made of a composite material with short fibers.

According to a preferred variant, the channel 2 is made of a composite material.

Therefore, different conditions can then occur:
- in a first case, only the channel 2 is made of a composite material;
- in a second case, only the central assembly 3 is at least partially made of a composite material with short fibers; and
- in a third case, both the channel 2, and the central assembly 3 are at least partially made of a composite material.

According to a preferred embodiment, the rim 1 is also provided with a number of sensors which are suited to check the structural soundness of said rim 1. In particular, said sensors are connected to an outer surface 7 of the channel 2, or to an inner surface 8 of the channel 2, or are alternatively embedded inside the channel 2, or even are connected to the central assembly 3 or embedded in the central assembly 3.

According to a first variant, the sensors are optical fibers suited to check the presence of cracks in the composite material of the rim 1 and suited to control the polymerization cycle.

According to a second variant, the sensors are piezoceramic sensors which are suited to generate ultrasonic waves that propagate into the composite material of the rim 1, and subsequently, said sensors which are suited to acquire the return ultrasonic waves to allow verifying the presence of cracks in the composite material of the rim 1 and, if present, also to assess their evolution compared to an initial condition. In the case wherein the piezoceramics sensors are used, it is possible to arrange them in correspondence to a surface of the channel 2 to any surface of the assembly 3 and use them as central balancing means of a respective wheel.

It appears evident that said piezoceramic sensors arranged in correspondence to a surface of the channel 2 to any surface of the central assembly 3 and used as means for balancing a respective wheel may find application with any rim 1; in other words said sensors can be used with a rim made of any material (e.g., metal or composite material).

The following describes the manufacturing method of said rim 1.

The central assembly 3 is obtained by a process of press moulding. The starting material is a material made of carbon fiber with short fibers, preferably carbon fibers with a length up to 25-50 mm having isotropic characteristics due to the random distribution of short fibers. To the carbon fiber material with short fibers a resin is added, preferably of the thermosetting type (for example an epoxy resin or vinyl ester). Said moulding process is commonly known as SMC (*Sheet Moulding Compounds*).

The starting material is subjected to a compression moulding for the manufacturing of the central assembly 3, by using a very limited intervention of an operator.

According to a variant, after the compression moulding step to obtain the central assembly 3, on said central assembly 3 some skins 6 made of a composite material with a long fibers are placed.

The channel 2 is instead obtained in two successive steps. In an initial step, a dry preform is obtained by interlacing continuous fibers of carbon according to the known Braiding or Filament Winding technique (both known and not described in detail) in order to obtain a preform. Subsequently, the preform of the channel 2 is inserted inside a mould M in which, once the mould M itself is closed, a resin is injected inside which impregnates the preform to complete the manufacturing of the channel 2 according to the known technique of *Resin Transfer Moulding - RTM.*

The manufacturing method of the channel 2 allows to obtain the distribution of continuous fiber over the entire circumference of the channel 2 itself and, consequently, a better structural reliability of the rim 1.

Advantageously, it is possible to envisage to embed a number of sensors which are suited to check the structural soundness of said rim 1 in the channel 2 during the injection step of the resin to complete the manufacturing of the channel 2 according to the known *Resin Transfer Moulding - RTM* technique.

Alternatively, once the formation of channel 2 is completed, the sensors are connected to the outer surface 7 of the channel 2 or to the inner surface 8 of the channel 2 or even to the central assembly 3.

According to a preferred variant, inside the mould M wherein the resin is injected to complete the manufacturing of the channel 2 according to the *Resin Transfer Moulding - RTM* technique also the central assembly 3 is housed (i.e. the hub 4 and the number of spokes 5) previously produced. In this way, during the injection of the resin also the final step of assembling the central channel 2 to the assembly 3 takes place. It is important to highlight that the central assembly 3 is inserted inside the mould M already polymerized and the injection of the resin ensures, on the one hand, to impregnate with the resin the preform of the channel 2 to allow to complete the processing of the channel 2 itself and, on the other hand, to allow a structural bonding of the channel 2 to the central assembly 3.

In essence, the common aspect among the different variants described above, is the possibility of obtaining a weight reduced rim 1 with consequent advantages in terms of reduction of fuel consumption and performance optimization for motor vehicles that are equipped with one of said rims.

Moreover, the manufacturing method described in the foregoing discussion allows to limit the manual intervention of operators, with obvious advantages in terms of productive rates.

## Claims

1. A method for manufacturing a rim (1) for a motor vehicle; said rim (1) comprising an outer channel (2) which is suited to define a seat for receiving a tire and a central assembly (3), which comprises, in turn, a hub (4) for the connection to a respective hub of an axle shaft of the motor vehicle and a number of peripherals spokes (5) for the connection of the hub (4) to the channel (2); the method comprises the steps of:
manufacturing the central assembly (3), at least partially, performed by means of a press moulding process, known as SMC - *Sheet Moulding Compounds* and by using a carbon fiber material with short fibers, preferably carbon fibers having a length up to 25-50 mm, and a resin, preferably of the thermosetting type;
manufacturing the outer channel (2);
assembling the outer channel (2) and the central assembly (3) so as to obtain the rim (1);
the method is **characterized in that** the step of manufacturing the outer channel (2) comprises the sub-steps of
- obtaining a preform of the channel (2) by interlacing continuous carbon fibers by means of the Braiding or Filament Winding technique;
- inserting the preform of the channel (2) into a mould (M); and
- injecting resin into the mould (M) according to the *Resin Transfer Moulding (RTM)* technique to complete the manufacturing of the channel (2) made of composite material; and **in that** the step of assembling the outer channel (2) and the central assembly (3) so as to obtain the rim (1) comprises the sub-steps of:
inserting the central assembly (3) together with the preform of the channel (2) into the mould (M); and
injecting resin into the mould (M) according to the *Resin Transfer Moulding (RTM)* technique so as to complete the manufacturing of the central assembly (3) and of the channel (2).

2. The method according to claim 1 and comprising the further step of placing a number of skins (6) made of a composite material with long fibers on top of said central assembly (3).

3. The method according to one of the preceding claims and comprising the further step of providing the rim (1) with a number of sensors, which are suited to check the structural soundness of said rim (1), and arranging them in a position selected among the following positions: connected to an outer surface (7) of the channel (2), embedded inside the channel (2), connected to an inner surface (8) of the channel (2), connected to the central assembly (3) or embedded inside central assembly (3).

4. A rim (1) for a motor vehicle, in particular for road motor vehicles, which is manufactured following a manufacturing method according to one or more of the claims from 1 to 3.

5. The rim according to claim 4, wherein said rim (1) is not provided with an insert made of metallic material and arranged in correspondence to the hub (4) of the central assembly (3), so as to improve the coupling of the hub (4) itself to the respective hub of an axle shaft of the motor vehicle.

6. The rim according to claim 4 or 5 and comprising a number of sensors which are suited to check the structural soundness of said rim (1) and arranged in a position selected among the following positions: connected to an outer surface (7) of the channel (2), embedded inside the channel (2), connected to an inner surface (8) of the channel (2), connected to the central assembly (3) or embedded inside the central assembly (3).

7. The rim according to claim 6, wherein said number of sensors are piezoceramic sensors.

8. The rim according to claim 7, wherein said number of piezoceramic sensors act as balancing means of a respective wheel and are connected on a surface of the channel (2), in particular on an inner surface (8) and/or on any surface of the central assembly (3).

## Patentansprüche

1. Ein Verfahren zur Herstellung einer Felge (1) für ein Kraftfahrzeug; wobei die Felge (1) einen äußeren Kanal (2) umfasst, der geeignet ist, einen Sitz zur Aufnahme eines Reifens zu bestimmen, und einen zentralen Aufbau (3), der wiederum Folgendes umfasst: eine Nabe (4) zur Verbindung mit einer entsprechenden Nabe einer Achswelle des Motorfahrzeugs und eine Reihe peripherer Speichen (5) zur Verbindung der Nabe (4) mit dem Kanal (2); wobei das Verfahren folgende Schritte umfasst:
Herstellen des zentralen Aufbaus (3), zumindest teilweise, mit Hilfe eines Pressformverfahrens, bekannt als SMC - Sheet *Moulding Compounds,* und mit Hilfe eines Carbonfasermaterials mit kurzen Fasern, vorzugsweise Carbonfasern mit einer Länge bis zu 25-50 mm, und eines Harzes, vorzugsweise vom wärmehärtbaren Typ; Herstellen des äußeren Kanals (2);
Zusammenbauen des äußeren Kanals (2) und des zentralen Aufbaus (3), um die Felge (1) herzustellen;
wobei das Verfahren **dadurch gekennzeichnet ist, dass** der Schritt der Herstellung des äußeren Kanals (2) folgende Teilschritte umfasst:
- Gewinnen eines Vorformlings des Kanals (2) durch Verflechten durchgehender Carbonfasern mit Hilfe des Verflechtungs- oder Filamentwickelverfahrens;
- Einsetzen des Vorformlings des Kanals (2) in eine Form (M); und
- Einspritzen von Harz in die Form (M) nach dem *Harzinjektionsverfahren, Resin Transfer Moulding - RTM,* um die Herstellung des Kanals (2) aus Verbundmaterial abzuschließen;
und dadurch, dass der Schritt des Zusammenbauens des äußeren Kanals (2) und des zentralen Aufbaus (3), um die Felge (1) herzustellen, folgende Teilschritte umfasst:
Einsetzen des zentralen Aufbaus (3) gemeinsam mit dem Vorformling des Kanals (2) in die Form (M); und
Einspritzen von Harz in die Form (M) nach dem *Harzinjektionsverfahren, RTM,* um die Herstellung des zentralen Aufbaus (3) und des Kanals (2) abzuschließen.

2. Das Verfahren gemäß Anspruch 1, das weiter folgenden Schritt umfasst: Platzieren einer Reihe von Schalen (6) aus einem Verbundmaterial mit langen Fasern auf den zentralen Aufbau (3).

3. Das Verfahren gemäß einem der obigen Ansprüche, das weiter folgenden Schritt umfasst: Ausstatten der Felge (1) mit einer Reihe von Sensoren, die geeignet sind, die strukturelle Integrität der Felge (1) zu überprüfen, und Anordnen derselben in einer Position, die gewählt ist aus folgenden Positionen: verbunden mit einer Außenfläche (7) des Kanals (2), eingebettet in den Kanal (2), verbunden mit einer Innenfläche (8) des Kanals (2), verbunden mit dem zentralen Aufbau (3) oder in den zentralen Aufbau (3) eingebettet.

4. Eine Felge (1) für ein Kraftfahrzeug, insbesondere für Straßenkraftfahrzeuge, die nach einem Herstellungsverfahren gemäß einem oder mehreren der Ansprüche 1 bis 3 hergestellt ist.

5. Die Felge gemäß Anspruch 4, wobei die Felge (1) nicht mit einem Einsatz aus Metallmaterial versehen ist und an der Nabe (4) des zentralen Aufbaus (3) angeordnet ist, um die Kopplung der Nabe (4) selbst mit der entsprechenden Nabe einer Achswelle des Kraftfahrzeugs zu verbessern.

6. Die Felge gemäß Anspruch 4 oder 5, die eine Reihe von Sensoren umfasst, die geeignet sind, die strukturelle Integrität der Felge (1) zu überprüfen, und angeordnet in einer Position, die gewählt ist aus folgenden Positionen: verbunden mit einer Außenfläche (7) des Kanals (2), eingebettet in den Kanal (2), verbunden mit einer Innenfläche (8) des Kanals (2), verbunden mit dem zentralen Aufbau (3) oder in den zentralen Aufbau (3) eingebettet.

7. Die Felge gemäß Anspruch 6, wobei die Reihe von Sensoren piezokeramische Sensoren sind.

8. Die Felge gemäß Anspruch 7, wobei die Reihe piezokeramischer Sensoren als Ausgleichsmittel für ein entsprechendes Rad dienen und mit einer Oberfläche des Kanals (2) verbunden sind, im Speziellen mit einer Innenfläche (8) und/oder mit einer beliebigen Oberfläche des zentralen Aufbaus (3).

## Revendications

1. Procédé pour fabriquer une jante (1) pour un véhicule à moteur ;
ladite jante (1) comprenant un canal extérieur (2) qui est adapté pour définir un siège pour recevoir un pneumatique et un assemblage central (3), qui comprend, à son tour, un moyeu (4) pour la connexion à un moyeu respectif d'un arbre axial du véhicule à moteur et un certain nombre de rayons périphériques (5) pour la connexion du moyeu (4) au canal (2) ; le procédé comprend les étapes de :
fabrication de l'assemblage central (3), au moins en partie, réalisée au moyen d'un processus de moulage par presse, connu sous le nom de préimprégnés et en utilisant un matériau de fibres de carbone avec des fibres courtes, de préférence des fibres de carbone ayant une longueur allant jusqu'à 25-50 mm, et une résine, de préférence du type thermodurcissable ;
fabrication du canal extérieur (2) ;
assemblage du canal extérieur (2) et de l'assemblage central (3) de façon à obtenir la jante (1) ;
le procédé est **caractérisé en ce que** l'étape de fabrication du canal extérieur (2) comprend les sous-étapes :
d'obtention d'une préforme du canal (2) en entrelaçant des fibres de carbone continues au moyen de la technique de tressage ou d'enroulement de filament ;
d'insertion de la préforme du canal (2) dans un moule (M) ; et
d'injection de résine dans le moule (M) selon la technique de moulage par transfert de résine (MTR) pour terminer la fabrication du canal (2) fait de matériau composite ;
et **en ce que** l'étape d'assemblage du canal extérieur (2) et de l'assemblage central (3) de façon à obtenir la jante (1) comprend les sous-étapes ;
d'insertion de l'assemblage central (3) avec la préforme du canal (2) dans le moule (M) ; et
d'injection de résine dans le moule (M) selon la technique de moulage par transfert de résine (MTR) de façon à terminer la fabrication de l'assemblage central (3) et du canal (2).

2. Procédé selon la revendication 1 et comprenant l'étape supplémentaire de placement d'un certain nombre de peaux (6) faites d'un matériau composite avec de langues fibres sur le haut dudit assemblage central (3).

3. Procédé selon l'une des revendication précédentes et comprenant l'étape supplémentaire de fourniture à la jante (1) d'un certain nombre de capteurs, qui sont adaptés pour vérifier le bon état structurel de ladite jante (1), et d'agencement de ceux-ci dans une position sélectionnée parmi les positions suivantes : connectés à une surface extérieure (7) du canal (2), incorporés à l'intérieur du canal (2), connectés à une surface intérieure (8) du canal (2), connectés à l'assemblage central (3) ou incorporés à l'intérieur de l'assemblage central (3).

4. Jante (1) pour un véhicule à moteur, en particulier pour des véhicules routiers à moteur, qui est fabriquée suivant un procédé de fabrication selon un ou plusieurs des revendication 1 à 3.

5. Jante selon la revendication 4, dans laquelle ladite jante (1) n'est pas pourvue d'un insert fait de matériau métallique et agencé en correspondance au moyeu (4) de l'assemblage central (3), de façon à améliorer le couplage du moyeu (4) lui-même au moyeu respectif d'un arbre axial du véhicule à moteur.

6. Jante selon la revendication 4 ou 5 et comprenant un certain nombre de capteurs qui sont adaptés pour vérifier le bon état structurel de ladite jante (1) et agencés dans une position sélectionnée parmi les positions suivantes : connectés à une surface extérieure (7) du canal (2), incorporées à l'intérieur du canal (2), connectés à une surface intérieure (8) du canal (2), connectés à l'assemblage central (3) ou incorporés à l'intérieur de l'assemblage central (3).

7. Jante selon la revendication 6, dans laquelle ledit nombre de capteurs sont des capteurs piézoélectriques.

8. Jante selon la revendication 7, dans laquelle ledit nombre de capteurs piézoélectriques agissent comme des moyens d'équilibrage d'une roue respective et sont connectés sur une surface du canal (2), en particulier sur une surface intérieure (8) et/ou sur toute surface de l'assemblage central (3).
